# EUROPÄISCHE PATENTSCHRIFT

(11) **EP 2 366 070 B1**
(45) Veröffentlichungstag und Bekanntmachung des Hinweises auf die Patenterteilung: **26.06.2013**
(21) Anmeldenummer: 09755891.0
(22) Anmeldetag: 16.11.2009
(51) Int. Cl.: F16D 23/06

(54) **RÜCKWÄRTSGANGSCHALTANORDNUNG UND ZAHNRÄDERWECHSELGETRIEBE**
REVERSE GEAR SHIFTING ASSEMBLY AND VARIABLE SPEED GEARWHEEL TRANSMISSION
AGENCEMENT DE COMMUTATION DE LA MARCHE ARRIÈRE, AINSI QUE BOÎTE DE VITESSES À ENGRENAGES

(30) Priorität: 15.12.2008 DE 102008054665
(43) Veröffentlichungstag der Anmeldung: 21.09.2011
(73) Patentinhaber: ZF Friedrichshafen AG, 88038 Friedrichshafen (DE)
(72) Erfinder: RENNER, Stefan, 78351 Bodman-Ludwigshafen (DE)
(86) Internationale Anmeldenummer: PCT/EP2009/065203
(87) Internationale Veröffentlichungsnummer: WO 2010/072466

(56) Entgegenhaltungen:
- DE-A1- 1 450 722
- DE-A1- 1 550 701
- DE-A1- 2 722 103
- GB-A- 2 008 208
- US-A- 5 607 037

## Beschreibung

Die vorliegende Erfindung betrifft eine Rückwärtsgangschaltanordnung eines Zahnräderwechselgetriebes gemäß dem Oberbegriff des Patentanspruchs 1 und ein Zahnräderwechselgetriebe mit einer derartigen Schaltanordnung gemäß dem Oberbegriff des Patentanspruchs 13.

Manuell schaltbare und automatisierte Zahnräderwechselgetriebe werden bis heute aus Kostengründen und wegen des begrenzten Bauraumes häufig ohne mechanische Synchronisierung des Rückwärtsganges gebaut und verwendet. Dabei treten jedoch beim Einlegen des Rückwärtsganges unter bestimmten Bedingungen unangenehme Ratschgeräusche und Schaltschläge auf. Das Ratschen beim Einlegen des Rückwärtsganges verursacht überdies einen verstärkten Verschleiß der Zahnräder. Außerdem kann es bei warmem Getriebe zu langen Umschaltzeiten kommen.

Zur Vermeidung dieser Nachteile sind bereits verschiedene Lösungen vorgeschlagen worden. Keine dieser Lösungen ist jedoch optimal, weil diese zuviel Bauraum, einen hohen Herstellungsaufwand oder lange Schaltzeiten erfordern.

Aus der DE 100 54 757 A1 ist eine Schaltanordnung zum schnellen, geräuschfreien Schalten des Rückwärtsganges in einem Zahnräderwechselgetriebe bekannt, die sehr wenig Bauraum benötigt. Darin ist eine Schaltanordnung mit einem Rückwärtsgangzahnrad beschrieben, dem ein Synchronring und ein Kupplungskörper mit Reibkonus zugeordnet sind. Der Kupplungskörper ist drehfest mit einer Getriebewelle verbunden. Der Synchronring ist mit einer umlaufenden Nut versehen, in die eine Ringfeder eingesetzt ist. Auch eine Innenverzahnung des Rückwärtsgangzahnrades ist mit einer umlaufenden Nut versehen, die bei nicht eingelegtem Rückwärtsgang der im Synchronring ausgebildeten Nut gegenüberliegt und in die die Ringfeder teilweise eingreift. Zum Einschalten des Rückwärtsganges muss zunächst die Federkraft der Ringfeder überwunden werden, wodurch ein Reibkonus des Synchronringes auf den Reibkonus des Kupplungskörpers gedrückt wird und eine Synchronisierung zwischen den Drehzahlen des Zahnrades und der Getriebewelle stattfindet. Die Federkraft der Ringfeder muss entsprechend hoch gewählt werden, um eine ausreichende Synchronisierung bei allen Betriebsbedingungen zu gewährleisten und um ein zu schnelles Durchschalten und ein Ratschen zu verhindern.

Bei dieser Schaltanordnung muss zum Einlegen des Rückwärtsganges immer die gleiche Federkraft der Ringfeder überwunden werden, unabhängig von Betriebsbedingungen wie beispielsweise der Temperatur und damit unabhängig davon, ob der Synchronvorgang früher oder später abgeschlossen ist. Dies hat zur Folge, dass bei einer Schaltanordnung gemäß der DE 100 54 757 A1 der Schaltkomfort bei bestimmten Betriebsbedingungen entweder durch einen starken Schaltwiderstand bei starker Ringfeder oder durch Ratschgeräusche bei schwacher Ringfeder eingeschränkt ist.

Es ist deshalb die Aufgabe der vorliegende Erfindung eine Schaltanordnung zum störungsfreien, komfortablen Schalten des Rückwärtsganges in einem Zahnräderwechselgetriebe bei allen Betriebsbedingungen zu schaffen, die möglichst wenig Bauraum benötigt und ein ratschfreies Schalten gewährleistet. Des Weiteren soll ein entsprechendes Zahnräderwechselgetriebe angegeben werden.

Gelöst wird diese Aufgabe durch eine Rückwärtsgangschaltanordnung mit den Merkmalen des Patentanspruchs 1 und ein Zahnräderwechselgetriebe gemäß Patentanspruch 13. Vorteilhafte Weiterbildungen sind in den jeweiligen abhängigen Ansprüchen beschrieben.

Es wird eine Schaltanordnung zum Schalten des Rückwärtsganges eines Zahnräderwechselgetriebes mit einem rotierbar auf einer Getriebewelle angeordneten Rückwärtsgangzahnrad vorgeschlagen. Das Rückwärtsgangzahnrad weist eine erste Kupplungsverzahnung auf. Dem Rückwärtsgangzahnrad ist ein drehfest mit der Getriebewelle verbundener Kupplungskörper mit einer zweiten Kupplungsverzahnung zugeordnet. Zum Einschalten des Rückwärtsganges werden die erste und die zweite Kupplungsverzahnung miteinander in Eingriff gebracht, indem sie beispielsweise in axialer Richtung ineinander geschoben werden. Mit dem Rückwärtsgangzahnrad ist ein Synchronring wirkverbunden, der eine Reibfläche aufweist, die während des Synchronvorganges mit einer Gegenreibfläche zusammenwirkt.

Erfindungsgemäß sind der Synchronring und das Rückwärtsgangzahnrad um einen begrenzten Winkelbetrag in Umfangsrichtung gegeneinander verdrehbar. Der Synchronring und das Rückwärtsgangzahnrad können dadurch zwischen einer Sperrstellung und einer Durchschaltstellung gegeneinander verdreht werden. Es ist außerdem zumindest ein Spannelement zwischen dem Synchronring und dem Rückwärtsgangzahnrad angeordnet, welches den Synchronring gegenüber dem Rückwärtsgangzahnrad in Richtung der Sperrstellung vorspannt, wobei das Ineinanderschieben der beiden Kupplungsverzahnungen in der Sperrstellung durch zumindest ein Sperrelement formschlüssig verhindert ist. Dadurch steht die Schaltanordnung im nicht geschalteten Zustand des Rückwärtsganges immer in der Sperrstellung und ein zu schnelles oder unbeabsichtigtes Durchschalten in den Rückwärtsgang ist wirksam verhindert.

Somit weist die erfindungsgemäße Schaltvorrichtung für den Rückwärtsgang die Vorteile einer herkömmlichen Sperrsynchronisierung auf, wobei jedoch weniger Bauteile und entsprechend weniger Bauraum benötigt werden. Während des Synchronvorganges, d.h. solange die aneinander anzugleichenden Drehzahlen noch nicht gleich sind, summieren sich die Spannkraft, die auf das Spannelement wirkt und die Reibkraft, die durch die unterschiedliche Drehzahl an den Reibflächen entsteht, zu einer Sperrkraft, welche die Schaltanordnung in der Sperrstellung hält und damit ein vorzeitiges, schädliches Durchschalten verhindert. Als Sperrkräfte wirken also die durch das vorgespannte Spannelement bewirkte Kraft in Umfangsrichtung und die durch den Synchronisiervorgang zwischen Reib- und Gegenreibfläche erzeugte Kraft in Umfangsrichtung.

Der Synchronvorgang beginnt, wenn die Reib- und die Gegenreibfläche beim Einschalten des Rückwärtsganges beginnen ein Drehmoment zu erzeugen und ist abgeschlossen, wenn zumindest annähernd gleiche Drehzahlen erreicht sind. Nach Abschluss des Synchronvorganges, d.h. wenn die Drehzahlen des Rückwärtsgangzahnrades und des Kupplungskörpers zumindest annähernd gleich groß sind, kann unter Anwendung einer geringen Schaltkraft die Sperrstellung aufgehoben werden, indem das Spannelement und damit das zumindest eine Sperrelement gegenüber dem Rückwärtsgangzahnrad in eine Durchschaltstellung verdreht wird. Dabei wird die Vorspannkraft des Spannelementes überwunden. In der Durchschaltstellung kann die erste Kupplungsverzahnung an dem Rückwärtsgangzahnrad mit der zweiten Kupplungsverzahnung an dem Kupplungskörper in Eingriff gebracht werden, so dass über das Rückwärtsgangzahnrad ein Drehmoment auf die Getriebewelle übertragbar ist. Die Vorspannkraft des Spannelementes kann verhältnismäßig gering gehalten werden.

Die erste Kupplungsverzahnung an dem Rückwärtsgangzahnrad kann entweder einteilig mit dem Zahnrad ausgeführt sein oder auch an einem drehfest mit dem Rückwärtsgangzahnrad verbundenen Kupplungskörper angeformt sein.

Gemäß einer ersten bevorzugten Ausgestaltung der Erfindung ist die Gegenreibfläche, welche mit der Reibfläche des Synchronringes zusammenwirkt, an einem benachbart zu dem Rückwärtsgangzahnrad angeordneten Vorwärtsgangzahnrad angeordnet. Diese Ausführung weist besonders wenige Bauteile auf und ermöglicht einen noch kleineren Bauraum.

Da das Rückwärtsgangzahnrad und das benachbarte Vorwärtsgangzahnrad über die Vorgelegewelle in entgegengesetzten Drehrichtungen zwangsgekoppelt sind, kann die gemeinsame Drehzahl bei dieser Ausführungsform nur die Drehzahl Null sein. In der Regel ist in Zahnräderwechseigetrieben neben dem Rückwärtsgangzahnrad das Zahnrad für den ersten Gang angeordnet, welches in dieser Ausgestaltung zusätzlich als Gegenreibfläche dient.

Gemäß einer zweiten bevorzugten Ausgestaltung ist die Gegenreibfläche an einem drehfest mit der Getriebewelle verbundenen Synchronelement ausgebildet. Das Synchronelement kann als separater Ring oder einteilig mit dem Kupplungskörper ausgebildet sein und weist eine konische Gegenreibfläche auf.

Eine weitere bevorzugte Ausführung sieht vor, dass das zumindest eine Sperrelement als mehrere gleichmäßig über den Umfang des Synchronringes verteilte Sperrbolzen ausgeführt ist. Die Ausführung als Sperrbolzen-Synchronisierung ermöglicht eine weiter optimierte Ausnutzung des Bauraumes, insbesondere auch dadurch, dass die Sperrbolzen beim Einschalten des Rückwärtsganges in zugeordnete Bohrungen in dem Rückwärtsgangzahnrad hineingeschoben werden.

Der Synchronring kann beispielsweise mit dem Rückwärtsgangzahnrad formschlüssig verbunden sein, so dass der Synchronring gemeinsam mit dem Rückwärtsgangzahnrad um die Getriebewelle rotiert. Die formschlüssige Verbindung zwischen Synchronring und Rückwärtsgangzahnrad lässt jedoch zumindest soviel Spiel in Umfangsrichtung zu, dass ein Verdrehen der beiden Teile zwischen der Sperrstellung und der Durchschaltstellung möglich ist. Dabei entspricht die Drehachse der Mittelachse der Getriebewelle. Gemäß einer weiteren bevorzugten Ausgestaltung der Erfindung weist der zumindest eine zylindrische Sperrbolzen an seinem freien Ende einen zylindrischen Mitnahmestift auf, welcher einen kleineren Durchmesser als der Rest des Sperrbolzens hat und in eine dem Mitnahmestift zugeordnete Bohrung in dem Rückwärtsgangzahnrad hineinragt.

Bevorzugt ist der Übergang vom größeren Durchmesser des Sperrbolzens auf den kleineren Durchmesser des Mitnahmestiftes als konische Sperrfläche ausgebildet ist.

Ein weiterer Aspekt der Erfindung betrifft das Spannelement, welches den Synchronring gegen das Rückwärtsgangzahnrad vorspannt und solange in der Sperrstellung hält, bis die Schaltbetätigungskraft beim Einschalten des Rückwärtsganges nach dem Synchronvorgang die Spannkraft überwindet und den Synchronring mit Sperrbolzen gegenüber dem Rückwärtsgangzahnrad in die Durchschaltstellung verdreht. Bevorzugt ist das Spannelement als Lochscheibe ausgebildet, die an dem Rückwärtsgangzahnrad verdrehbar angeordnet ist und die für jeden Sperrbolzen ein Durchgangsloch aufweist. Vorzugsweise ist die Lochscheibe mittels einer Schraubendruck- oder einer Schraubenzugfeder gegenüber dem Rückwärtsgangzahnrad vorgespannt.

Zum Ein- und Ausschalten des Rückwärtsganges wird bevorzugt das Rückwärtsgangzahnrad in axialer Richtung gegenüber der Getriebewelle verschoben, um die Kupplungsverzahnungen miteinander in bzw. aus dem gegenseitigen Eingriff zu bringen. Im Vergleich zu herkömmlichen synchronisierten Schaltanordnungen wird dadurch eine separate Schiebemuffe und ein Synchronkörper eingespart, was vor allem den Bauraum in axialer Richtung deutlich reduziert. Es ist auch denkbar, dass anstatt des Rückwärtsgangzahnrades der Kupplungskörper axial verschoben wird, um die Kupplungsverzahnungen miteinander in Eingriff zu bringen.

Durch die genannten, Bauraum sparenden Gestaltungsmerkmale wird es möglich, dass der Kupplungskörper, der Synchronring, das Spannelement und das Sperrelement innerhalb der Außenkonturen des Rückwärtsgangzahnrades und des dem Rückwärtsgangzahnrad benachbarten Vorwärtsgangzahnrades angeordnet sind. Dies bedeutet, dass die vorgeschlagene Schaltanordnung mit einer Synchronisierung des Rückwärtsganges sogar bauraumneutral ausgebildet ist, d.h. die Schaltanordnung kommt im Vergleich zu Schaltanordnungen mit nicht synchronisiertem Rückwärtsgang ohne zusätzlichen Bauraum aus. Mit einer herkömmlichen Synchronisiereinheit mit Synchronkörper und Schiebemuffe ist dies nicht möglich, weil diese Bauteile insbesondere in axialer Richtung zusätzlichen Bauraum erfordern.

Die Erfindung umfasst auch Schaltanordnungen mit Synchronisierungen, die an sich bekannte Doppelkonus- oder Mehrfachkonus-Synchronisierungen aufweisen.

Schließlich wird ein Zahnräderwechselgetriebe beansprucht, das eine oben beschriebene Schaltanordnung aufweist.

Ausführungsbeispiele der erfindungsgemäßen Schaltanordnung sind in den nachfolgenden Figuren dargestellt und im Folgenden näher beschrieben. Dabei zeigt
- Figur 1: einen Ausschnitt einer ersten Ausführungsform der erfindungsgemäßen Schaltanordnung bei eingeschaltetem Rückwärtsgang in schematischer Schnittdarstellung,
- Figur 2: einen Ausschnitt einer zweiten Ausführungsform der erfindungsgemäßen Schaltanordnung bei ausgeschaltetem Rückwärtsgang in schematischer Schnittdarstellung,
- Figur 3: einen Ausschnitt der zweiten Ausführungsform der erfindungsgemäßen Schaltanordnung bei eingeschaltetem Rückwärtsgang in schematischer Schnittdarstellung,
- Figur 4: einen Ausschnitt aus einer erfindungsgemäßen Schaltanordnung mit der schematischen Schnittdarstellung der Wirkverbindung zwischen dem Rückwärtsgangzahnrad, einem Sperrelement und dem Spannelement bei ausgeschaltetem Rückwärtsgang und
- Figur 5: einen Ausschnitt aus einer erfindungsgemäßen Schaltanordnung mit der schematischen Schnittdarstellung der Wirkverbindung zwischen dem Rückwärtsgangzahnrad, einem Sperrelement und dem Spannelement bei eingeschaltetem Rückwärtsgang.

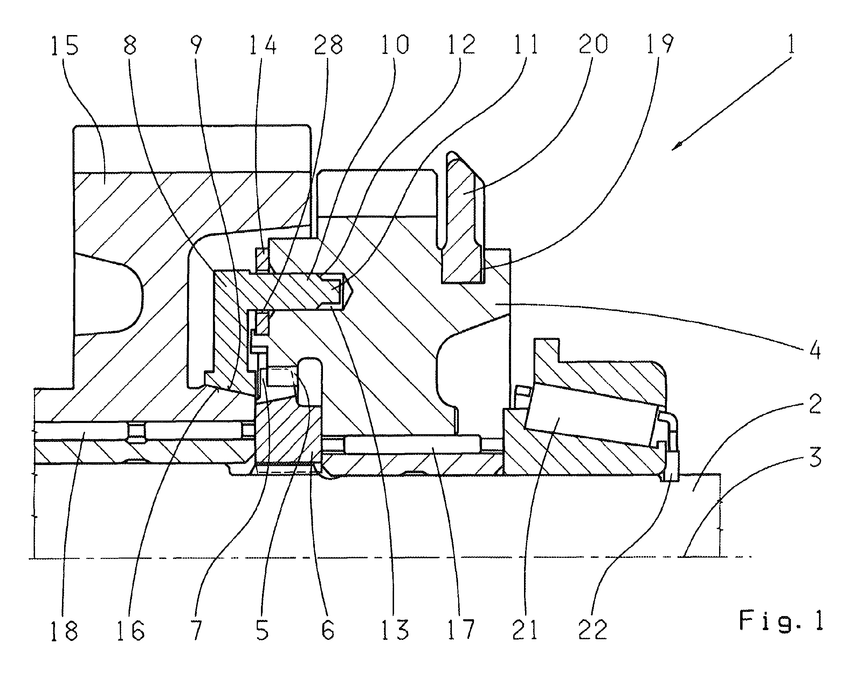

Bei der in Fig. 1 dargestellten Ausführungsform der erfindungsgemäßen Schaltanordnung 1 ist ein Rückwärtsgangzahnrad 4 rotierbar und axial verschiebbar auf einer Getriebewelle 2 angeordnet. Das Rückwärtsgangzahnrad rotiert um die Mittelachse 3 der Getriebewelle 2 und ist mittels eines Wälzlagers 17 auf der Getriebewelle 2 gelagert. Im Bereich des äußeren Umfanges des Rückwärtsgangzahnrades 4 weist dieses eine Nut 19 auf, in die das Ende einer Schaltgabel 20 eingreift. Neben dem Rückwärtsgangzahnrad 4 ist ein Vorwärtsgangzahnrad 15 ebenfalls über ein Wälzlager 18 auf der Getriebewelle 2 um deren Mittelachse 3 rotierbar gelagert.

Auf der dem Vorwärtsgangzahnrad 15 abgewandten Seite des Rückwärtsgangzahnrades 4 ist auf der Getriebewelle 2 ein Rollenlager 21 angeordnet, über das die Getriebewelle 2 in einem nicht dargestellten Getriebegehäuse gelagert ist. Die Getriebewelle 2 kann beispielsweise die Abtriebswelle des Getriebes sein. Das Rückwärtsgangzahnrad 4 und das Rollenlager 21 sind in axialer Richtung durch einen Sicherungsring 22 gegenüber der Getriebewelle 2 abgestützt.

Zwischen dem Rückwärtsgangzahnrad 4 und dem Vorwärtsgangzahnrad 15 ist ein Kupplungskörper 6 drehfest auf der Getriebewelle 2 befestigt. Dieser weist an seinem äußeren Umfang eine zweite Kupplungsverzahnung 7 auf, welche im dargestellten Zustand mit einer auf dem Rückwärtsgangzahnrad 4 angebrachten ersten Kupplungsverzahnung 5 im Eingriff ist.

Zwischen dem Rückwärtsgangzahnrad 4 und dem Vorwärtsgangzahnrad 15 ist des Weiteren ein Synchronring 8 mit mehreren gleichmäßig über den Umfang des Synchronringes 8 verteilten Sperrbolzen 10 angeordnet. Die Sperrbolzen 10 sind in diesem Ausführungsbeispiel einteilig mit dem Synchronring 8 ausgeführt. Von den Sperrbolzen 10 ist in der Fig. 1 nur einer sichtbar. Der Sperrbolzen 10 ragt in dem dargestellten, geschalteten Zustand des Rückwärtsganges in eine dem Sperrbolzen 10 zugeordnete Bohrung 13 in dem Rückwärtsgangzahnrad 14 hinein. Am freien Ende des Sperrbolzens 10 ist ein Mitnahmestift 11 angeordnet. Von seinem größeren Durchmesser geht der Sperrbolzen 10 durch eine konische Sperrfläche 12 über in den kleineren Durchmesser des Mitnahmestiftes 11.

Im Bereich seines Innendurchmessers weist der Synchronring 8 eine konische Reibfläche 9 auf, welche während des Synchronvorganges mit einer ihr gegenüberliegenden Gegenreibfläche 16 zusammenwirkt. Die Gegenreibfläche 16 ist bei dieser Ausführungsform direkt an dem Vorwärtsgangzahnrad 15 angeordnet.

Ebenfalls zwischen dem Rückwärtsgangzahnrad 4 und dem Vorwärtsgangzahnrad 15 ist ein Spannelement 14 in Form einer Lochscheibe angeordnet. Die Lochscheibe 14 weist ein Durchgangsloch 28 auf, durch das der an dem Synchronring 8 befestigte Sperrbolzen 10 in die Bohrung 13 des Rückwärtsgangzahnrades 4 hinein ragt.

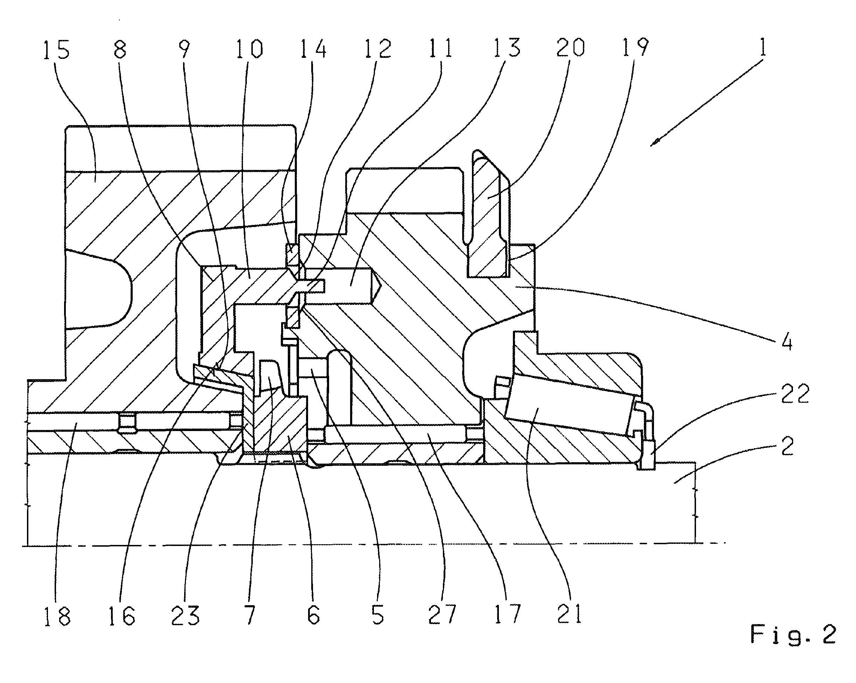

Die Figur 2 zeigt einen Ausschnitt einer zweiten Ausführungsform der erfindungsgemäßen Schaltanordnung bei ausgeschaltetem Rückwärtsgang. Da die zweite Ausführungsform einen ähnlichen Aufbau aufweist wie die in Fig. 1 dargestellte erste Ausführungsform, sind für gleiche Bauteile und Merkmale in Fig. 1 und in Fig. 2 die gleichen Bezugsziffern verwendet worden.

Der wesentliche Unterschied der zweiten Ausführungsform in Fig. 2 im Vergleich zu der ersten Ausführungsform aus Fig. 1 ist der, dass die Gegenreibfläche 16 nicht an dem Vorwärtsgangzahnrad 15 angeordnet ist, sondern auf einem separaten Ring 23, der zwischen dem Kupplungskörper 6 und dem Vorwärtsgangzahnrad 15 drehfest auf der Getriebewelle 2 angeordnet ist. Der Ring 23 weist dazu an seinem äußeren Umfang eine konische Fläche auf, die als Gegenreibfläche 16 dient. Mit der Gegenreibfläche 16 wirkt die am Synchronring 8 angeordnete Reibfläche 9 zusammen wie auch bei der oben beschriebenen ersten Ausführungsform.

Fig. 2 zeigt die Schaltanordnung in ausgeschaltetem Zustand des Rückwärtsganges. Deshalb befindet sich das Rückwärtsgangzahnrad 4 in der Position, in der es am Weitesten von dem benachbarten Vorwärtsgangzahnrad 15 entfernt ist und im Bereich seines inneren Durchmessers an dem Wälzlager 21 ansteht. Die erste Kupplungsverzahnung 5 des Rückwärtsgangzahnrades 4 steht nicht im Eingriff mit der zweiten Kupplungsverzahnung 7 an dem Kupplungskörper 6. Deshalb besteht in diesem Zustand keine drehmomentübertragende Verbindung zwischen dem Rückwärtsgangzahnrad 4 und der Getriebewelle 2.

Im ausgeschalteten Zustand des Rückwärtsganges ragt nur noch der Mitnahmestift 11 des Sperrbolzens 10 in die Bohrung 13 in dem Rückwärtsgangzahnrad 4 hinein. Da der Mitnahmestift 11 einen kleineren Durchmesser aufweist als die Bohrung 13, wird der einteilig mit dem Sperrbolzen 10 und Mitnahmestift 11 ausgeführte Synchronring 10 von dem vorgespannten Spannelement 14 in Umfangsrichtung um einen bestimmten Winkelbetrag gegenüber dem Rückwärtsgangzahnrad 4 verdreht. In diesem Zustand befindet sich die Schaltanordnung 1 in der Sperrstellung.

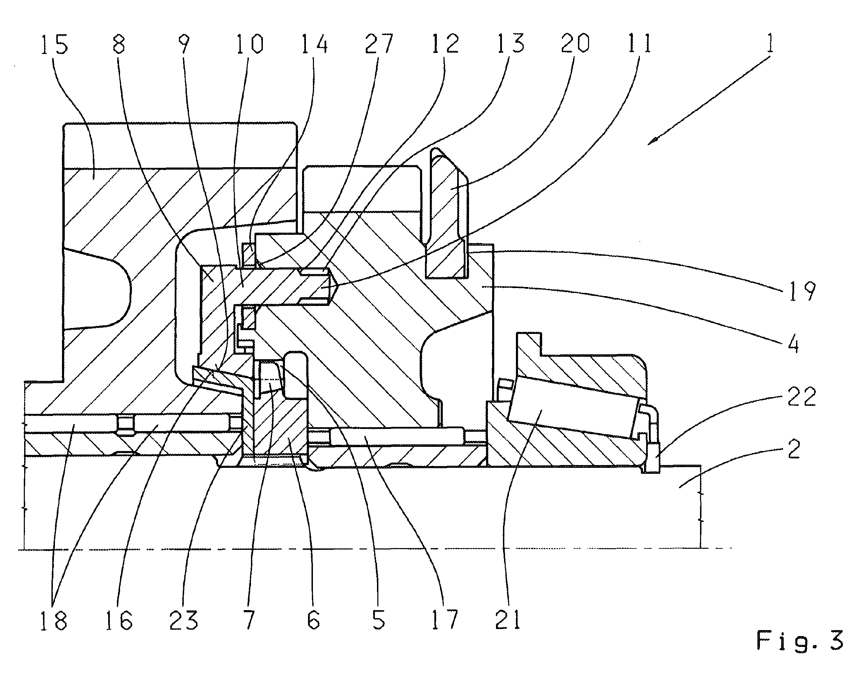

Fig. 3 zeigt die gleiche Ausführungsform wie Fig. 2, jedoch bei eingeschaltetem Rückwärtsgang. Dabei ist das Rückwärtsgangzahnrad 4 durch die Schaltgabel 20 ganz nach links verschoben worden, so dass das Rückwärtsgangzahnrad 4 an seinem inneren Durchmesser an dem Kupplungskörper 6 ansteht. Die erste und die zweite Kupplungsverzahnung 5 und 7 greifen ineinander ein und es besteht eine drehmomentübertragende Verbindung zwischen dem Rückwärtsgangzahnrad 4 und der Getriebewelle 2. Der Sperrbolzen 10 ragt auch mit seinem großen Durchmesser in die Bohrung 13 in dem Rückwärtsgangzahnrad 4 hinein. Die Schaltanordnung 1 befindet sich in diesem Zustand in der Durchschaltstellung.

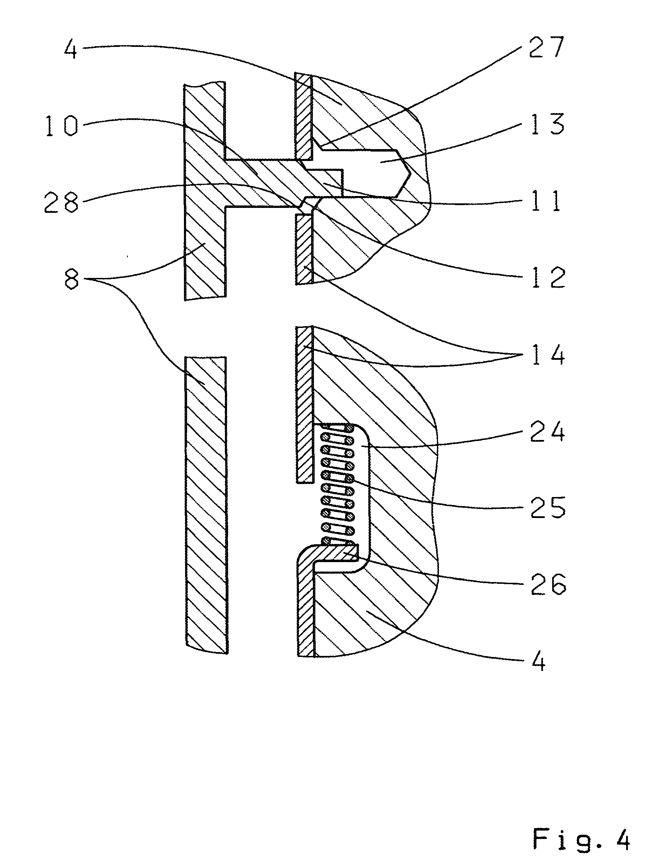

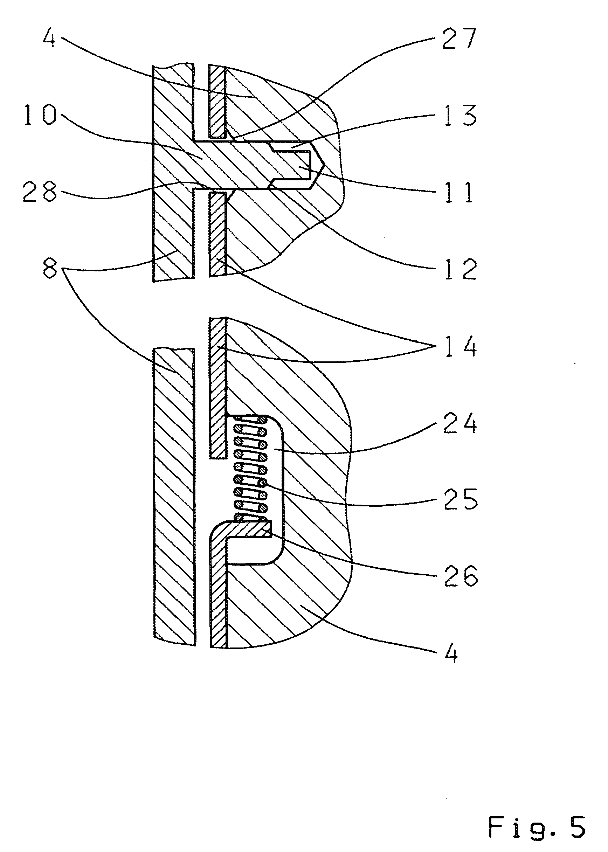

Die Zuordnung und Positionierung von dem Rückwärtsgangzahnrad 4, einem Sperrelement 10 und dem Spannelement 14 bei ausgeschaltetem und eingeschaltetem Rückwärtsgang zeigen die Fig. 4 und Fig. 5 in jeweils einem Ausschnitt mit dem Sperrbolzen 10 und einem Ausschnitt mit der formschlüssigen Verbindung zwischen dem Spannelement 14 und dem Rückwärtsgangzahnrad 4.

Fig. 4 zeigt die beiden Ausschnitte bei ausgeschaltetem Rückwärtsgang in der Sperrstellung. Das Rückwärtsgangzahnrad 4 befindet sich in seiner ganz nach rechts verschobenen Stellung. Dadurch ist der starr mit dem Synchronring 8 verbundene Sperrbolzen 10 soweit aus der Bohrung 13 in dem Rückwärtsgangzahnrad 4 herausgezogen, dass nur noch der Mitnahmestift 11 am freien Ende des Sperrbolzens 10 in die Bohrung 13 hineinragt. Da der Mitnahmestift 11 einen geringeren Durchmesser aufweist als die Bohrung 13, ist der Synchronring 8 mit dem Sperrbolzen 10 und dem Mitnahmestift 11 von dem in Umfangsrichtung vorgespannten Spannelement 14 gegenüber dem Rückwärtsgangzahnrad 4 soweit verdreht, dass der Mitnahmestift 11 an der Innenfläche der Bohrung 13 ansteht. Eine Durchgangsbohrung 28 in dem Spannelement 14, durch die der Sperrbolzen 10 hindurch ragt, ist zu der Bohrung 13 in dem Rückwärtsgangzahnrad 4 um einen bestimmten Winkelbetrag versetzt angeordnet. Ein axiales Verschieben des Rückwärtsgangzahnrades 4 in Richtung des Synchronringes 8 wird in dieser Sperrstellung von den gegeneinander liegenden Sperrflächen 12 und 27 verhindert.

Der untere Teil der Fig. 4 zeigt eine mögliche Art, wie die Vorspannung des Spannelementes 14 gegenüber dem Rückwärtsgangzahnrad 4 aufgebracht werden kann. Das Rückwärtsgangzahnrad 4 weist dazu eine Ausnehmung 24 in seiner dem Synchronring 8 und dem Spannelement 14 zugewandten Seitenfläche auf. An dem Spannelement 14 ist eine Mitnahmelasche 26 angeformt, die in die Ausnehmung 24 hineinragt und mit einer in der Ausnehmung 24 angeordneten Schraubendruckfeder 25 zusammenwirkt. Die Schraubendruckfeder 25 stützt sich dazu an ihrem einen Ende gegen eine Seitenfläche der Ausnehmung 24 ab und drückt mit ihrem anderen Ende gegen die Mitnahmelasche 26 des Spannelementes 14. Durch Verwendung von Schraubendruckfedem 25 mit verschiedenen Federkennlinien kann die Höhe der Vorspannkraft gezielt beeinflusst werden. Bei der Ausgestaltung der Ausnehmung 24 und der Auswahl der Schraubendruckfeder 24 muss darauf geachtet werden, dass der mögliche Verdrehwinkel zwischen dem Spannelement 14 und dem Rückwärtsgangzahnrad 4 zumindest eine Verdrehung zwischen der Sperrstellung und der Durchschaltstellung zulässt.

Die Fig. 5 zeigt die gleichen Ausschnitte wie Fig. 4, jedoch bei eingeschaltetem Rückwärtsgang in der Durchschaltstellung. Das Rückwärtsgangzahnrad 4 befindet sich in seiner ganz nach links geschobenen Stellung. Dadurch ist der starr mit dem Synchronring 8 verbundene Sperrbolzen 10 soweit in die Bohrung 13 in dem Rückwärtsgangzahnrad 4 hineingeschoben, dass der Sperrbolzen 10 im Bereich seines großen Durchmessers an der Innenfläche der Bohrung 13 ansteht. Die Durchgangsbohrung 28 in dem Spannelement 14 liegt etwa deckungsgleich zu der Bohrung 13 in dem Rückwärtsgangzahnrad 4.

Die Funktion einer erfindungsgemäßen Schaltanordnung wird nachfolgend anhand eines Schaltablaufes beschrieben.

Vor dem Einschalten des Rückwärtsganges stehen die Schaltanordnung und deren Bauteile in der in Fig. 2 dargestellten Sperrstellung. Die Kupplungsverzahnungen 5 und 7 sind nicht miteinander im Eingriff, weil das auf der Getriebewelle 2 axial verschiebbare Rückwärtsgangzahnrad 4 in seiner nach rechts verschobenen Position steht. Dadurch sind die Sperrbolzen 10 soweit aus den zugeordneten Bohrungen 13 im Rückwärtsgangzahnrad 4 herausgezogen, dass nur noch der jeweilige Mitnahmestift 11 in die Bohrung 13 hineinragt. Durch die Vorspannung auf dem Spannelement 14 verdreht dieses den Synchronring 8 mit den Sperrbolzen 10 soweit gegenüber dem Rückwärtsgangzahnrad 4, dass der Mitnahmestift 11 innen am Umfang der Bohrung 13 anliegt und sich die Sperrflächen 12 und 17 gegenüberliegen.

Zum Einschalten des Rückwärtsganges wird das Rückwärtsgangzahnrad 4 über die Schaltgabel 20 axial auf der Getriebewelle 2 nach links verschoben. Dabei treffen die Sperrflächen 12 und 27 nach einem ersten kurzen Verschiebeweg aufeinander. Die Schaltbetätigungskraft in axialer Richtung wird über die Sperrflächen auf den Synchronring 8 übertragen und die Reibfläche 9 somit auf die drehfest mit der Getriebewelle 2 verbundene Gegenreibfläche 16 gedrückt. Die Reibkraft zwischen der Reibfläche 9 und der Gegenreibfläche 16 sorgt nun dafür, dass bestehende Drehzahldifferenzen zwischen der Getriebewelle 2 und dem Rückwärtsgangzahnrad 4 ausgeglichen werden. Die Reibkraft wirkt während des Synchronvorganges gemeinsam mit der Spannkraft der Feder 25 als Sperrkraft in Umfangsrichtung derart, dass der Synchronring 8 gegenüber dem Rückwärtsgangzahnrad 4 in der Sperrstellung gehalten wird. Erst dann, wenn die Drehzahlen der Getriebewelle 2 und des Rückwärtsgangzahnrad 4 zumindest annähernd gleich groß sind, nimmt die Reibkraft und damit die Sperrkraft in Umfangsrichtung spürbar ab und es wird möglich durch die Schaltbetätigungskraft die Sperrkraft zu überwinden. Dazu wird das Rückwärtsgangzahnrad 4 weiter nach links verschoben, so dass die konischen Sperrflächen 12 und 17 aneinander abgleiten, wobei das Spannelement 14 entgegen der Spannkraft der Feder 25 verdreht wird. Dabei wird das Rückwärtsgangzahnrad 4 gegenüber dem Synchronring 4 und der Getriebewelle 2 soweit verdreht, bis die Sperrbolzen 10 in die Bohrung 13 hineingeschoben werden können, wobei gleichzeitig die Kupplungsverzahnungen 5 und 7 miteinander in Eingriff gebracht werden. Damit ist eine drehmomentübertragende Verbindung über das Rückwärtsgangzahnrad 4 und die Getriebewelle 2 hergestellt.

Bei der Ausführungsform gemäß Fig. 1 werden beim Synchronvorgang die Drehzahlen des Rückwärtsgangzahnrades 4 und des benachbart angeordneten Vorwärtsgangzahnrades 15 für den ersten Gang synchronisiert. Da die beiden genannten Zahnräder 4 und 15 über eine nicht dargestellte Vorgelegewelle drehfest, aber in unterschiedlichen Drehrichtungen miteinander verbunden sind, kann die gemeinsame Drehzahl dieser Zahnräder immer nur die Drehzahl Null sein.

**Bezugszeichen**

| | |
|---|---|
| 1 | Schaltanordnung |
| 2 | Getriebewelle |
| 3 | Mittelachse |
| 4 | Rückwärtsgangzahnrad |
| 5 | Kupplungsverzahnung |
| 6 | Kupplungskörper |
| 7 | Kupplungsverzahnung |
| 8 | Synchronring |
| 9 | Reibfläche |
| 10 | Sperrbolzen |
| 11 | Mitnahmestift |
| 12 | Sperrfläche |
| 13 | Bohrung |
| 14 | Spannelement |
| 15 | Vorwärtsgangzahnrad |
| 16 | Gegenreibfläche |
| 17 | Wälzlager |
| 18 | Wälzlager |
| 19 | Nut |
| 20 | Schaltgabel |
| 21 | Rollenlager |
| 22 | Sicherungsring |
| 23 | Ring |
| 24 | Ausnehmung |
| 25 | Schraubendruckfedern |
| 26 | Mitnahmelasche |
| 27 | Sperrfläche |
| 28 | Ausnehmung |

## Patentansprüche

1. Rückwärtsgangschaltanordnung (1) eines Zahnräderwechselgetriebes mit einem rotierbar auf einer Getriebewelle (2) angeordneten Rückwärtsgangzahnrad (4), das eine erste Kupplungsverzahnung (5) aufweist, wobei dem Rückwärtsgangzahnrad (4) ein drehfest mit der Getriebewelle (2) verbundener Kupplungskörper (6) mit einer zweiten Kupplungsverzahnung (7) zugeordnet ist, wobei zum Einschalten des Rückwärtsganges die erste und die zweite Kupplungsverzahnung (5, 7) miteinander in Eingriff gebracht werden, wobei dem Rückwärtsgangzahnrad (4) ein Synchronring (8) mit einer Reibfläche (9) zugeordnet ist, die während eines Synchronvorganges mit einer Gegenreibfläche (16) zusammenwirkt, **dadurch gekennzeichnet,**
**dass** der Synchronring (8) und das Rückwärtsgangzahnrad (4) um einen begrenzten Winkelbetrag in Umfangsrichtung zwischen einer Sperrstellung und einer Durchschaltstellung gegeneinander verdrehbar sind,
**dass** zumindest ein Spannelement (14) zwischen dem Synchronring (8) und dem Rückwärtsgangzahnrad (4) angeordnet und derart mit dem Synchronring (8) und dem Rückwärtsgangzahnrad (4) wirkverbunden ist, dass der Synchronring (8) gegenüber dem Rückwärtsgangzahnrad (4) in Richtung der Sperrstellung vorgespannt ist, und
**dass** in der Sperrstellung zumindest ein Sperrelement (10) das Ineinanderschieben der beiden Kupplungsverzahnungen (5, 7) formschlüssig verhindert.

2. Rückwärtsgangschaltanordnung nach Anspruch 1, **dadurch gekennzeichnet, dass** die Gegenreibfläche (16) an einem benachbart zu dem Rückwärtsgangzahnrad (4) angeordneten Vorwärtsgangzahnrad (15) angeordnet ist.

3. Rückwärtsgangschaltanordnung nach Anspruch 1, **dadurch gekennzeichnet, dass** die Gegenreibfläche (16) an einem drehfest mit der Getriebewelle (2) verbundenen Synchronelement (23) ausgebildet ist.

4. Rückwärtsgangschaltanordnung nach Anspruch 3, **dadurch gekennzeichnet, dass** das Synchronelement (23) als Ring mit einer konischen Gegenreibfläche (16) ausgebildet ist.

5. Rückwärtsgangschaltanordnung nach Anspruch 3, **dadurch gekennzeichnet, dass** das Synchronelement (23) einteilig mit dem Kupplungskörper (6) ausgebildet ist.

6. Rückwärtsgangschaltanordnung nach einem der vorgenannten Ansprüche, **dadurch gekennzeichnet, dass** das zumindest eine Sperrelement (10) als mehrere gleichmäßig über den Umfang des Synchronringes (8) verteilte Sperrbolzen (10) ausgeführt ist.

7. Rückwärtsgangschaltanordnung nach Anspruch 6, **dadurch gekennzeichnet, dass** zumindest ein zylindrischer Sperrbolzen (10) an seinem freien Ende einen zylindrischen Mitnahmestift (11) aufweist, der einen kleineren Durchmesser als der Rest des Sperrbolzens (10) aufweist und in eine dem Mitnahmestift (11) zugeordnete Bohrung (13) in dem Rückwärtsgangzahnrad (4) hineinragt.

8. Rückwärtsgangschaltanordnung nach Anspruch 7, **dadurch gekennzeichnet, dass** der Übergang vom größeren Durchmesser des Sperrbolzens (10) auf den kleineren Durchmesser des Mitnahmestiftes (11) als konische Sperrfläche (12) ausgebildet ist.

9. Rückwärtsgangschaltanordnung nach einem der Ansprüche 6 bis 8, **dadurch gekennzeichnet, dass** das Spannelement (14) als eine Lochscheibe ausgebildet ist, die an dem Rückwärtsgangzahnrad (4) verdrehbar angeordnet ist und die für jeden Sperrbolzen (10) ein Durchgangsloch (28) aufweist.

10. Rückwärtsgangschaltanordnung nach Anspruch 9, **dadurch gekennzeichnet, dass** die Lochscheibe (14) mittels einer Schraubendruck- oder einer Schraubenzugfeder (25) gegenüber dem Rückwärtsgangzahnrad (4) vorgespannt ist.

11. Rückwärtsgangschaltanordnung nach einem der vorgenannten Ansprüche, **dadurch gekennzeichnet, dass** das Rückwärtsgangzahnrad (4) zum Ein- und Ausschalten des Rückwärtsganges in axialer Richtung gegenüber der Getriebewelle (2) verschoben wird.

12. Rückwärtsgangschaltanordnung nach einem der vorgenannten Ansprüche, **dadurch gekennzeichnet, dass** der Kupplungskörper (6), der Synchronring (8), das Spannelement (14) und das Sperrelement (10) zumindest im eingeschalteten Zustand des Rückwärtsganges innerhalb der Außenkonturen des Rückwärtsgangzahnrades (4) und des dem Rückwärtsgangzahnrad benachbarten Vorwärtsgangzahnrades (15) angeordnet sind.

13. Zahnräderwechselgetriebe, **gekennzeichnet durch** eine Rückwärtsgangschaltanordnung (1) nach einem der vorgenannten Ansprüche.

## Claims

1. Reverse gear shifting assembly (1) of a variable speed gearwheel transmission with a reverse gear gearwheel (4) which is arranged rotatably on a transmission shaft (2) and has a first clutch toothing (5), wherein the reverse gear gearwheel (4) is assigned a clutch body (6), which is connected in a rotationally conjoint manner to the transmission shaft (2), with a second clutch toothing (7), wherein the first and the second clutch toothing (5, 7) are brought into engagement with one another for activation of the reverse gear, wherein the reverse gear gearwheel (4) is assigned a synchronizer ring (8) with a friction surface (9) which interacts with a counter friction surface (16) during a synchronizing operation, **characterized in that**
the synchronizer ring (8) and the reverse gear gearwheel (4) are rotatable with respect to one another by a restricted angular amount in the circumferential direction between a locked position and a throughshift position,
that at least one tensioning element (14) is arranged between the synchronizer ring (8) and the reverse gear gearwheel (4) and is operatively connected to the synchronizer ring (8) and the reverse gear gearwheel (4) in such a manner that the synchronizer ring (8) is pretensioned with respect to the reverse gear gearwheel (4) in the direction of the locked position, and
that, in the locked position, at least one locking element (10) prevents the two clutch toothings (5, 7) being pushed into one another in a positive locking manner.

2. Reverse gear shifting assembly according to Claim 1, **characterized in that** the counter friction surface (16) is arranged on a forward gear gearwheel (15) arranged adjacent to the reverse gear gearwheel (4).

3. Reverse gear shifting assembly according to Claim 1, **characterized in that** the counter friction surface (16) is formed on a synchronizer element (23) connected in a rotationally conjoint manner to the transmission shaft (2).

4. Reverse gear shifting assembly according to Claim 3, **characterized in that** the synchronizer element (23) is formed as a ring with a conical counter friction surface (16).

5. Reverse gear shifting assembly according to Claim 3, **characterized in that** the synchronizer element (23) is formed in one piece with the clutch body (6).

6. Reverse gear shifting assembly according to one of the above claims, **characterized in that** the at least one locking element (10) is embodied as a plurality of locking bolts (10) distributed evenly over the circumference of the synchronizer ring (8).

7. Reverse gear shifting assembly according to Claim 6, **characterized in that** at least one cylindrical locking bolt (10) has, at its free end, a cylindrical driving pin (11) which has a smaller diameter than the rest of the locking bolt (10) and protrudes into a bore (13) assigned to the driving pin (11) in the reverse gear gearwheel (4).

8. Reverse gear shifting assembly according to Claim 7, **characterized in that** the transition from the larger diameter of the locking bolt (10) to the smaller diameter of the driving pin (11) is formed as a conical locking surface (12).

9. Reverse gear shifting assembly according to one of Claims 6 to 8, **characterized in that** the tensioning element (14) is formed as a perforated disc which is arranged rotatably on the reverse gear gearwheel (4) and which has a through hole (28) for each locking bolt (10).

10. Reverse gear shifting assembly according to Claim 9, **characterized in that** the perforated disc (14) is pretensioned with respect to the reverse gear gearwheel (4) by means of a helical compression spring or a screw tension spring (25).

11. Reverse gear shifting assembly according to one of the above claims, **characterized in that** the reverse gear gearwheel (4) is displaced in the axial direction with respect to the transmission shaft (2) for activation and deactivation of the reverse gear.

12. Reverse gear shifting assembly according to one of the above claims, **characterized in that** the clutch body (6), the synchronizer ring (8), the tensioning element (14) and the locking element (10) are arranged at least in the activated state of the reverse gear within the outer contours of the reverse gear gearwheel (4) and of the forward gear gearwheel (15) adjacent to the reverse gear gearwheel.

13. Variable speed gearwheel transmission, **characterized by** a reverse gear shifting assembly (1) according to one of the above claims.

## Revendications

1. Agencement de commutation de rapport de marche arrière (1) d'une boîte de vitesses à engrenages, comprenant un pignon de rapport de marche arrière (4) disposé de manière rotative sur un arbre de boîte de vitesses (2), lequel présente une première denture d'embrayage (5), un corps d'embrayage (6) connecté de manière solidaire en rotation à l'arbre de boîte de vitesses (2), avec une deuxième denture d'embrayage (7), étant associé au pignon de rapport de marche arrière (4), la première et la deuxième denture d'embrayage (5, 7) étant amenées en prise l'une avec l'autre pour l'enclenchement du rapport de marche arrière, une bague de synchronisation (8), avec une surface de friction (9), étant associée au pignon de rapport de marche arrière (4), laquelle surface de friction coopère avec une surface de friction conjuguée (16) pendant une opération de synchronisation, **caractérisé en ce que**
la bague de synchronisation (8) et le pignon de rapport de marche arrière (4) peuvent tourner l'un contre l'autre sur une plage angulaire limitée dans la direction périphérique entre une position de blocage et une position de passage de vitesse, au moins un élément de serrage (14) est disposé entre la bague de synchronisation (8) et le pignon de rapport de marche arrière (4), et est en liaison fonctionnelle avec la bague de synchronisation (8) et le pignon de rapport de marche arrière (4) de telle sorte que la bague de synchronisation (8) soit précontrainte dans la direction de la position de blocage par rapport au pignon de rapport de marche arrière (4), et
au moins un élément de blocage (10) empêche par engagement par coopération de forme dans la position de blocage l'emboîtement l'une dans l'autre des deux dentures d'embrayage (5, 7).

2. Agencement de commutation de rapport de marche arrière selon la revendication 1, **caractérisé en ce que** la surface de friction conjuguée (16) est disposée sur un pignon de rapport de marche avant (15) disposé à côté du pignon de rapport de marche arrière (4).

3. Agencement de commutation de rapport de marche arrière selon la revendication 1, **caractérisé en ce que** la surface de friction conjuguée (16) est réalisée sur un élément de synchronisation (23) connecté de manière solidaire en rotation à l'arbre de boîte de vitesses (2).

4. Agencement de commutation de rapport de marche arrière selon la revendication 3, **caractérisé en ce que** l'élément de synchronisation (23) est réalisé sous forme de bague avec une surface de friction conjuguée conique (16).

5. Agencement de commutation de rapport de marche arrière selon la revendication 3, **caractérisé en ce que** l'élément de synchronisation (23) est réalisé d'une seule pièce avec le corps d'embrayage (6).

6. Agencement de commutation de rapport de marche arrière selon l'une quelconque des revendications précédentes, **caractérisé en ce que** l'au moins un élément de blocage (10) est réalisé sous forme de plusieurs boulons de blocage (10) répartis uniformément sur la périphérie de la bague de synchronisation (8).

7. Agencement de commutation de rapport de marche arrière selon la revendication 6, **caractérisé en ce qu'**au moins un boulon de blocage cylindrique (10) présente, à son extrémité libre, une goupille d'entraînement cylindrique (11), qui présente un plus petit diamètre que le reste du boulon de blocage (10) et qui pénètre dans un alésage (13) associé à la goupille d'entraînement (11) dans le pignon de rapport de marche arrière (4).

8. Agencement de commutation de rapport de marche arrière selon la revendication 7, **caractérisé en ce que** le transfert du plus grand diamètre du boulon de blocage (10) au plus petit diamètre de la goupille d'entraînement (11) est réalisé sous forme de surface de blocage conique (12).

9. Agencement de commutation de rapport de marche arrière selon l'une quelconque des revendications 6 à 8, **caractérisé en ce que** l'élément de serrage (14) est réalisé sous forme de disque perforé, qui est disposé de manière rotative sur le pignon de rapport de marche arrière (4) et qui présente pour chaque boulon de blocage (10) un trou de passage (28).

10. Agencement de commutation de rapport de marche arrière selon la revendication 9, **caractérisé en ce que** le disque perforé (14) est précontraint par rapport au pignon de rapport de marche arrière (4) au moyen d'un ressort de compression à boudin ou d'un ressort de traction à boudin (25).

11. Agencement de commutation de rapport de marche arrière selon l'une quelconque des revendications précédentes, **caractérisé en ce que** le pignon de rapport de marche arrière (4) est déplacé dans la direction axiale par rapport à l'arbre de boîte de vitesses (2) pour l'enclenchement et la sortie du rapport de marche arrière.

12. Agencement de commutation de rapport de marche arrière selon l'une quelconque des revendications précédentes, **caractérisé en ce que** le corps d'embrayage (6), la bague de synchronisation (8), l'élément de serrage (14) et l'élément de blocage (10) sont disposés au moins dans l'état enclenché du rapport de marche arrière à l'intérieur des contours extérieurs du pignon de rapport de marche arrière (4) et du pignon de rapport de marche avant (15) adjacent au pignon de rapport de marche arrière.

13. Boîte de vitesses à engrenages, **caractérisée par** un agencement de commutation de rapport de marche arrière (1) selon l'une quelconque des revendications précédentes.
